## Europäisches Patentamt

## European Patent Office

## Office européen des brevets

(11) Veröffentlichungsnummer: **0 306 747**
**B1**

(12) **EUROPÄISCHE PATENTSCHRIFT**

(45) Veröffentlichungstag der Patentschrift:
**12.12.90**

(51) Int. Cl.⁵: **B32B 27/30**, B32B 27/32

(21) Anmeldenummer: **88113483.7**

(22) Anmeldetag: **19.08.88**

(54) Folie aus Weich-PVC und Verfahren zu deren Herstellung.

(30) Priorität: **05.09.87 DE 3729764**

(43) Veröffentlichungstag der Anmeldung:
**15.03.89 Patentblatt 89/11**

(45) Bekanntmachung des Hinweises auf die Patenterteilung:
**12.12.90 Patentblatt 90/50**

(84) Benannte Vertragsstaaten:
**AT BE DE ES FR GB IT LU NL SE**

(56) Entgegenhaltungen:
**AT-B- 301 861**
**AT-B- 326 367**
**GB-A- 1 362 579**

(73) Patentinhaber: **J. H. Benecke AG, Beneckeallee 40, D-3000 Hannover 1(DE)**

(72) Erfinder: **Neumann, Bernhard, Dr. rer. nat., Triftweg 6a, D-3330 Helmstedt(DE)**

(74) Vertreter: **König, Norbert, Dipl.-Phys. Dr. et al, Patentanwälte Leine & König Burckhardtstrasse 1, D-3000 Hannover 1(DE)**

## Beschreibung

Die Erfindung betrifft eine Folie der im Oberbegriff des Anspruchs 1 genannten Art sowie ein Verfahren zu deren Herstellung.

Marktgerechte Folien der genannten Art müssen u.a. zwei Qualitätsmerkmale erfüllen. Sie sollen auf der Funktionsseite hochglänzend und auf der Rückseite rauh oder matt ausgebildet sein. Die Rauhigkeit gewährleistet, daß Folien der betreffenden Art im Ballen gleichmäßig schrumpfen können und daß sie sich ohne zu blocken abrollen lassen.

Eine Folie mit diesen Merkmalen würde allerdings im Ballen , also im gewickelten Zustand, auf der glänzenden Oberfläche durch die Rückseite der jeweils darüber befindlichen Folienlage mattiert werden, und damit würde das Produkt unbrauchbar.

Aus diesem Grunde ist es bei derartigen marktüblichen Folien bekannt, jeweils zwei Folien, Glanzseite auf Glanzseite, reversibel zu dublieren und dann aufzuwickeln, so daß keine Beeinträchtigung der glänzenden Oberflächen erfolgt. Beim Verbrauch der Folien beim Endverbraucher werden die beiden Folien wieder auseinandergezogen.

Die Dublierung ist für Hersteller und Anwender von beträchtlichem Nachteil. Sie stellt dadurch, daß zwei zu dublierende Folien bei der Folienfertigung nicht doppelt zur Verfügung stehen, sondern immer erst zwei zueinanderführende Wickel produziert werden müssen, einen erhöhten Aufwand dar.

Eine Beurteilung der Oberflächen-Qualität ist nur nach Auseinanderziehen der Folie möglich.

Bei Folien, die mit Dessins bedruckt sind, ergibt sich darüber hinaus das Problem, daß die in den Druckfarben enthaltenen matten Pigmente bei Glanz-Glanz dublierter Ware den Glanz der jeweils gegenüberliegenden Oberfläche zerstören.

Der Erfindung liegt die Aufgabe zugrunde, eine Folie der betreffenden Art zu schaffen, bei der ohne Dublierung ein Aufwickeln der glänzenden Folie ohne Beeinträchtigung der glänzenden Oberfläche möglich ist.

Diese Aufgabe wird gelöst durch die im Kennzeichen des Anspruchs 1 angegebenen Merkmale.

Es hat sich in überraschender Weise gezeigt, daß Glanzfolien einfach gewickelt werden können, wenn ihre Oberfläche durch eine separate Folienlage aus Polypropylen (PP) geschützt ist. Die matte Rückseite der PVC-Folie beeinträchtigt nicht durch die PP-Folie hindurch den Glanz der im Wickel darunter befindlichen Oberfläche der PVC-Folienlage. Daher kann schon beim Aufwickeln einer frisch hergestellten PVC-Glanzfolie eine zusätzliche PP-Folie zulaufen und mit aufgewickelt werden, wodurch der Glanz des Produktes dauerhaft geschützt ist. Ebenso kann bei einer bedruckten Glanzfolie verfahren werden.

Ein weiterer Vorteil ergibt sich dadurch, daß ein Produkt der beschriebenen Art bei Temperaturänderungen keine Welligkeiten aufbaut. Dieser Vorteil ergibt sich beispielsweise nicht bei der Verwendung von PETP-Folien als Abdeckfolien.

Ein Verfahren zur Herstellung der Folie gemäß Anspruch 1 ist im Anspruch 3 angegeben.

Beispiel 1:

Eine Folie aus Weich-PVC, bestehend aus 70 Teilen PVC, 30 Teilen DOP (Dioctylphtalat), 2 Teilen Stabilisator und Pigment, wird nach Durchlaufen durch den Prägespalt eines Kalanders mit einer 0,012 mm dicken, biaxial-gereckten Polypropylenfolie überlagert und zusammen mit dieser als doppelschichtige Ware gewickelt.

Beispiel 2:

Der Oberfläche einer Weich-PVC-Folie gemäß Beispiel 1 wird nach dem Bedrucken in einer Druckmaschine und dem Abheizen der dabei aufgebrachten Lösemittel unmittelbar vor dem Wickeln mit einer zulaufenden Polypropylenfolie gemäß Beispiel 1 überlagert.

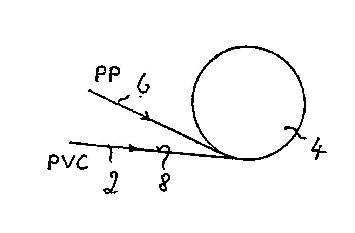

Anhand der beigefügten Zeichnung soll die Herstellung der erfindungsgemäßen Folie näher erläutert werden.

Eine Weich-PVC-Folie 2 wird nach Durchlaufen eines Prägespaltes eines Kalanders (nicht dargestellt) oder nach dem Bedrucken in einer Druckmaschine (nicht dargestellt) einer Wickelwalze 4 zugeführt. Gleichzeitig läuft von einem nicht dargestellten Wickel Polypropylen- Folie (PP-Folie) 6 auf die Glanzoberfläche 8 der PVC-Folie 2 auf, die dann zusammen mit der PP-Folie 6 als zweischichtige Ware auf der Wickelwalze 4 aufgewickelt wird.

## Patentansprüche

1. Folie aus Weich-PVC (Polyvinylchlorid), deren eine Oberfläche glänzend und deren andere Oberfläche matt ist, **dadurch gekennzeichnet**, daß die glänzende Oberfläche oder die bedruckte glänzende Oberfläche der Weich-PVC-Folie durch eine dünne, transparente, separate Folie aus Polypropylen (PP) geschützt ist.

2. Folie nach Anspruch 1, **dadurch gekennzeichnet**, daß die Polypropylen-Folie biaxial gereckt ist.

3. Verfahren zur Herstellung einer Folie gemäß Anspruch 1, **dadurch gekennzeichnet**, daß die Glanzoberfläche oder die bedruckte Glanzoberfläche der PVC-Folie mit einer zulaufenden, separaten Folie aus Polypropylen überlagert und zusammen mit dieser als doppelschichtige Ware aufgewickelt wird.

## Claims

1. A foil of soft PVC (polyvinylchloride), of which one surface is glossy and the other is matt, characterized in that the glossy surface or the printed glossy surface of the soft PVC foil is protected by a separate thin transparent foil of polypropylene (PP).

2. A foil as in Claim 1, characterized in that the polypropylene foil is oriented biaxially.

3. A method of production of a foil in accordance with Claim 1, characterized in that the glossy surface or the printed glossy surface of the PVC foil is overlaid by an added separate foil of polypropylene and is wound up together with it as a double-layer article.

**Revendications**

1. Feuille en PVC (polychlorure de vinyle) plastifié, dont une surface est brillante et l'autre surface est mate, caractérisée en ce que la surface brillante ou la surface brillante imprimée de la feuille en PVC imprimé est protégée par une feuille mince transparente séparée en polypropylène (PP).

2. Feuille selon la revendication 1, caractérisée en ce que la feuille en polypropylène est étirée biaxialement.

3. Procédé pour la fabrication d'une feuille selon la revendication 1, caractérisée en ce que la surface brillante ou la surface brillante imprimée de la feuille en PVC est superposée à une feuille séparée amenée en polypropylène et est enroulée avec celle-ci sous forme de produit à double couche.

PP 6

PVC 2 8 4